# EUROPÄISCHE PATENTSCHRIFT

(11) **EP 0 503 614 B1**
(45) Veröffentlichungstag und Bekanntmachung des Hinweises auf die Patenterteilung: **29.11.1995**
(21) Anmeldenummer: 92104246.1
(22) Anmeldetag: 12.03.1992
(51) Int. Cl.: H02G 15/007

(54) **Zugentlastungsvorrichtung für Signal-Übertragungskabel, insbesondere Glasfaserkabel**
Strain relief device for signal transmission cables, specially for glas fiber cables
Dispositif serre-câble pour câbles de transmission à signaux, notamment pour câbles en fibres de verre

(30) Priorität: 12.03.1991 CH 742/91
(43) Veröffentlichungstag der Anmeldung: 16.09.1992
(73) Patentinhaber: Reichle + De-Massari AG Elektro-Ingenieure, 8620 Wetzikon (CH)
(72) Erfinder: Reichle, Hans, CH-8620 Wetzikon (CH)
(74) Vertreter: Petschner, Goetz

(56) Entgegenhaltungen:
- AT-B- 389 365
- CH-A- 660 097
- DE-A- 2 256 080
- GB-A- 1 258 501
- US-A- 3 777 223

## Beschreibung

Die vorliegende Erfindung betrifft eine Zugentlastungsvorrichtung für Signal-Uebertragungskabel, insbesondere Glasfaserkabel gemäß dem Oberbegrift des Anspruchs 1. Eine solche Vorrichtung ist aus dem Dokument CH-A-660 097 bekannt.

In vielen Bereichen der Installationstechnik, insbesondere bei Schwachstromanlagen, wo für Anschluss-, Aenderungs- und Revisionsarbeiten die Stecker- und/oder Lötfahnenleisten aus dem Montagebereich des Verteilerkastens oder -schrankes herausgebracht werden müssen, wird die hierfür notwendige momentane Aufhebung der Zugentlastung an den Kabelschnüren als sehr hinderlich und umständlich empfunden, muss doch das hierfür übliche Band durchtrennt und dann ein neues Band wieder eingeschlauft werden, oder es ist eine Zugentlastungsbride aufzuschrauben und später wieder zu schliessen. Zudem müssen aus Platzgründen oft eine Mehrzahl Kabelschnüre zu deren Zugentlastung gemeinsam eingebunden bzw. von einer Bride gehalten werden, was ein Auswechseln der einen oder anderen Schnur sehr erschwert.

Noch kritischer stellt sich das Problem der Zugentlastung im Signal-Uebertragungsbereich mittels Glasfaserkabel, wo die Einzelleiterenden an Ort mit den Steckerelementen ausreichend dämpfungsarm zu verbinden sind und hierfür temporär die Zugentlastung aufgehoben werden muss.

Es ist deshalb Aufgabe der vorliegenden Erfindung, eine spezifische Zugentlastungsvorrichtung für Kabel der vorgenannten Art zu schaffen, welche gestattet, die vorerwähnten Nachteile und Schwierigkeiten der bisher angewendeten Techniken zu beseitigen.

Dies wird nun erfindungsgemäss dadurch erreicht, daß jeder Schlitz mindestens zwei Erweiterungen aufweist, von denen die äussere zur durchsteckbaren Aufnahme des Kabels und die innere zur klemmenden, zugentlastenden Aufnahme des Kabels dienen.

Durch diese Massnahmen lässt sich eine optimale Einzel-Zugentlastung verwirklichen, bei welcher die Einzelführung der Kabel sichergestellt ist. Besondere Ausführungsarten der Erfindung sind in den abhängigen Ansprüchen offenbart.

Für eine Schnellmontage sowie für temporäres Lösen der Zugentlastungsvorrichtung ist es von Vorteil, wenn der Steg- oder Flanschteil als ein Steck- oder Einschubteil ausgebildet ist. Hierfür können vom Steg- oder Flanschteil bodenseitig Klinkenmittel abragen.

Universalität wird zudem erreicht, wenn der Flanschteil von jeweils einem Schenkel eines U-Kanalprofils gebildet wird, was einen Kabelkanal mit beidseitigen Zugentlastungen für seitlich herausgeführte Kabel ergibt.

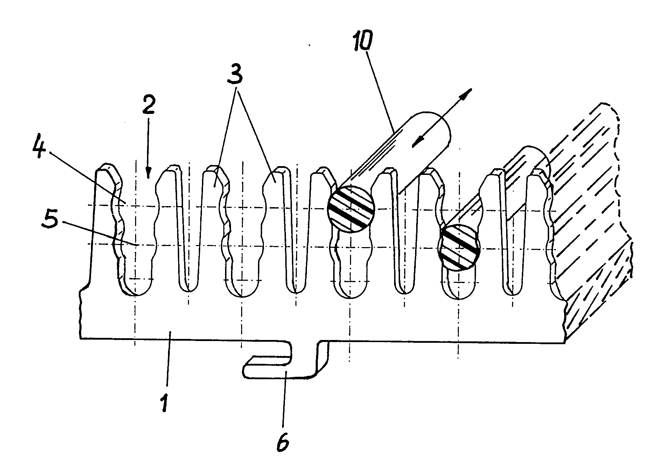

Eine beipsielsweise Ausführungsform des Erfindungsgegenstandes ist nachfolgend anhand der Zeichnung, welche in schaubildartiger Teildarstellung in vergrössertem Massstab die Zugentlastungsvorrichtung für Signal-Uebertragungskabel, insbesondere Glasfaserkabel zeigt, näher erläutert.

Die dargestellte Zugentlastungsvorrichtung für eine Mehrzahl Einzelkabel 10 umfasst einen Steg- oder Flanschteil 1, welcher in eine Mehrzahl, paarweise zum Eindrücken jeweils eines Kabels bestimmte, offene Schlitze 2 begrenzende Zungen 3 übergeht, wobei jeder Schlitz 2 mindestens zwei Erweiterungen 4,5 aufweist, von denen die äussere 4 zur durchsteckbaren Aufnahme des Kabels 10 und die innere 5 zur klemmenden, zugentlastenden Aufnahme des Kabels dienen.

Eine entsprechende Materialwahl erlaubt dabei das Eindrücken der Einzelkabel von oben. Vorzugsweise ist deshalb die dargestellte Zugentlastungsvorrichtung als ein einstückiges Kunststoffteil ausgebildet.

Für eine Schnellmontage am Verteiler oder dgl. (nicht gezeigt) resp. für ein temporäres Lösen ist der Steg- oder Flanschteil 1 als ein Steck- oder Einschubteil ausgebildet, wofür beispielsweise bodenseitig Klinkenmittel 6 abragen, welche mit hier nicht näher gezeigten Ausnehmungen am Montageort zusammenwirken können.

Für eine universelle Anwendung kann der rechenförmige Flanschteil 1 von jeweils einem Schenkel eines U-förmigen Kabelkanals (nicht gezeigt) gebildet sein.

Für sehr feine Kabel, wie Glasfaserkabel, ist es von Vorteil, wenn ein sehr breiter Steg verwendet wird, wie das in der Darstellung rechts angedeutet ist, um eine relativ grossflächige, knickhindernde Auflage für das Kabel zu erreichen.

Diese Ausgestaltung ist insbesondere für die Aufnahme hochempfindlicher Glasfaserkabel in Endverschluss-Kassetten geeignet, in welchen Glasfaserkabel-Arbeitsreserven resp. -Spleissreserven geschlauft sind, die beim Aus- resp. Einschub der Kassetten nachgeschleppt werden.

Somit ergibt sich aus dem Vorstehenden eine Zugentlastungsvorrichtung für Signal-Uebertragungskabel, insbesondere Glasfaserkabel, welche eine Herstellung resp. Aufhebung der Zugentlastung ermöglicht unter absoluter Gewährleistung der Einzelführung der betreffenden Kabel.

## Patentansprüche

1. Zugentlastungsvorrichtung für Signal-Uebertragungskabel, insbesondere Glasfaserkabel, mit einem Steg- oder Flanschteil (1), welcher in eine Mehrzahl, paarweise zum Eindrücken jeweils eines Kabels bestimmte, offene Schlitze (2) begrenzende Zungen (3) übergeht, dadurch gekennzeichnet, daß jeder Schlitz (2) mindestens zwei Erweiterungen (4,5) aufweist, von denen die äussere (4) zur durchsteckbaren Aufnahme des Kabels und die innere (5) zur klemmenden, zugentlastenden Aufnahme des Kabels dienen.

2. Zugentlastungsvorrichtung nach Anspruch 1, dadurch gekennzeichnet, dass der Steg- oder Flanschteil (1) als ein Steck- oder Einschubteil ausgebildet ist.

3. Zugentlastungsvorrichtung nach Anspruch 2, dadurch gekennzeichnet, dass der Steg- oder Flanschteil (1) bodenseitig abragende Klinkenmittel (6) trägt.

4. Zugentlastungsvorrichtung nach Anspruch 1, dadurch gekennzeichnet, dass der Flanschteil (1) von jeweils einem Schenkel eines U-Kanalprofils gebildet ist.

5. Zugentlastungsvorrichtung nach einem der Ansprüche 1 bis 4, gekennzeichnet durch einen einstückigen Kunststoffteil.

## Claims

1. A strain-relief device for signal transmission cables, in particular for optical cables, with a bridge or flange (1) which ends in a number of studs (3) bordering open slots (2), and pairs of these studs (3) are designed for receiving single cables which are pressed into them, characterized in that every slot (2) is provided with at least two recesses (4, 5), of which the outer recess (4) is for receiving the inserted cable and the inner recess (5) is for clamping the cable and relieving strain.

2. A strain-relief device as claimed in Claim 1, characterized in that the bridge or flange (1) is constructed as a plug-in part or module.

3. A strain-relief device as claimed in Claim 2, characterized in that a latching device (6) extends from the bottom of the bridge or flange (1).

4. A strain-relief device as claimed in Claim 1, characterized in that the flange (1) is formed by the two legs of the U-shaped channel section.

5. A strain-relief device as claimed in claims 1 to 4, characterized by a one-piece plastic part.

## Revendications

1. Dispositif de libération de la contrainte de traction pour des câbles de transmission de signaux, en particulier pour des câbles en fibres de verre avec une partie formant moulure ou bride (1) qui se transforme en une pluralité de languettes (3) délimitant des fentes (2) ouvertes et destinées à comprimer par paire le câble respectif, caractérisé en ce que chaque fente (2) présente au moins deux élargissements (4,5) dont l'extérieur (4) sert au logement enfichable du câble et l'intérieur (5) au logement par serrage et par libération de la contrainte de traction du câble.

2. Dispositif de libération de la contrainte de traction selon la revendication 1, caractérisé en ce que la partie formant moulure ou bride (1) est conçue comme une partie enfichable ou embrochable.

3. Dispositif de libération de la contrainte de traction selon la revendication 2, caractérisé en ce que la partie formant moulure ou bride (1) porte des moyens à agraphe (6) faisant saillie côté fond.

4. Dispositif de libération de la contrainte de traction selon la revendication 1, caractérisé en ce que la partie formant bride (1) est constituée par un côté d'un profilé de canal en U.

5. Dispositif de libération de la contrainte de traction selon l'une des revendications 1 à 4, caractérisé en ce qu'il est réalisé par une pièce en matière plastique d'un seul tenant.
